# EUROPÄISCHE PATENTANMELDUNG

(11) **EP 2 647 468 A1**
(43) Veröffentlichungstag der Anmeldung: **09.10.2013**
(21) Anmeldenummer: 12005147.9
(22) Anmeldetag: 12.07.2012
(51) Int. Cl.: B23K 37/053, B23K 9/32, B23K 9/16

(54) **Gasbeaufschlagungsvorrichtung für Rohrinnenbereiche mit mindestens einer Gas-Düseanordnung ; Schweissverfahren unter Verwendung einer solchen Gasbeaufschlagungsvorrichtung**

(30) Priorität: 05.04.2012 DE 102012006996
(71) Anmelder: Linde Aktiengesellschaft, 80331 Munich (DE)
(72) Erfinder: Münster, Stefan, 25373 Ellerhoop (DE)

(57) **Zusammenfassung**

Es wird eine Gasbeaufschlagungsvorrichtung für Rohrinnenbereiche (21) mit einem ersten Abschlusselement (1) und einem zweiten Abschlusselement (2) vorgeschlagen, wobei die Abschlusselemente (1,2) parallel angeordnet und axial voneinander beabstandet sind, wodurch zwischen den Abschlusselementen (1,2) ein Zwischenbereich (4) gebildet wird. Durch das erste Abschlusselement (1) führt wenigstens eine Gaszuleitung (5) und mündet in wenigstens eine in dem Zwischenbereich (4) angeordnete Ausströmeinrichtung. Die wenigstens eine Ausströmeinrichtung weist wenigstens eine Düsenanordnung (6) auf und ist dafür eingerichtet, einen Abschnitt (22) eines Rohrinnenbereichs (21) mit einem Gasstrom zu beaufschlagen, wenn die Gasbeaufschlagungsvorrichtung (10) in wenigstens ein Rohr (20) eingesetzt ist. Ein Schweißverfahren (100) ist ebenfalls Gegenstand der Erfindung.

## Beschreibung

Die Erfindung betrifft eine Gasbeaufschlagungsvorrichtung für Rohrinnenbereiche und ein Schweißverfahren, bei dem eine solche Vorrichtung verwendet wird.

### Stand der Technik

Der Hauptgrund für die Verwendung nichtrostender Stähle ist ihre allgemeine Korrosionsbeständigkeit. Um die Betriebssicherheit von geschweißten Konstruktionen aus solchen Stählen auch unter korrosiven Bedingungen zu gewährleisten, ist es erforderlich, ihre Eigenschaften auch bei der Herstellung von Schweißverbindungen zu erhalten. Unter der Einwirkung der Wärme aus dem Schweißprozess und von Sauerstoff kommt es bei nichtrostenden Stählen und anderen Werkstoffen (z.B. Titan) zur Bildung sogenannter Anlauffarben. Diese können die Korrosionsbeständigkeit hochlegierter Werkstoffe stark beeinträchtigen.

Die nachträgliche Entfernung von Anlauffarben ist insbesondere an der Innenfläche von Rohren problematisch. Rein chemische Verfahren, bei denen die Anlauffarben und sonstige Verunreinigungen mit einem Gemisch verschiedener Säuren von der Werkstückoberfläche entfernt werden, können aus Gründen des Umweltschutzes oder der Zugänglichkeit nicht immer eingesetzt werden. Geräte zum elektrochemischen Entfernen von Verfärbungen sind nur manuell zu bedienen und eher für den Einsatz an kleinere Werkstücken praktikabel. Beim Sandstrahlen und den anderen mechanischen Verfahren wie Schleifen oder Bürsten ist, sofern Zugänglichkeit besteht, der erforderliche Abtrag bzw. die Reinigungswirkung häufig zu gering.

Anstelle einer nachträglichen Entfernung wird daher beim Schweißen nichtrostender Stähle häufig mit sogenanntem Formiergas gearbeitet. Einen Überblick hierzu gibt die Broschüre "Formieren beim Schweißen" der Anmelderin.

Der Begriff "Formiergas" im engeren Sinne bezeichnet ausschließlich Stickstoff-/Wasserstoffgemische. Häufig werden die Begriffe "Wurzelschutzgas" und "Formiergas" jedoch synonym verwendet. Beim Schweißen kommen auch Argon-Wasserstoff-Gemische, reines Argon oder reiner Stickstoff zum Einsatz. Argon und Stickstoff wirken als Inertgase, wobei insbesondere Stickstoff beim Einsatz an Duplexstählen eine Verbesserung der Lochkorrosionsbeständigkeit zugeschrieben wird. Wasserstoff wirkt stark reduzierend. Er ist in der Lage, Restsauerstoff abzubinden und, ausreichend hohe Temperaturen vorausgesetzt, entstandene Oxide in ihr Basiselement zurückzuführen. Darüberhinaus beeinflusst Wasserstoff die Oberflächenspannung des schmelzflüssigen Materials an der Nahtwurzel, was für einen sehr guten Übergang zum Grundwerkstoff sorgt.

Insbesondere beim Schweißen von Rohren bestehen aufgrund der Zugänglichkeit Schwierigkeiten beim Einsatz von Formiergasen. Aus dem Stand der Technik sind zur Verwendung in Rohren sogenannte Doppelscheiben-Formiervorrichtungen bekannt, die in ein Rohr eingeführt werden können. Die Vorrichtungen weisen zwei scheibenförmige Abschlusselemente auf, die im Rohr einen abgeschlossenen Formierraum definieren. In diesen wird über einen zylindrischen Körper aus Sintermetall das Formiergas eingespeist. Das Sintermetall ist porös und somit gasdurchlässig. Hierdurch wird ein möglichst diffuser Gasaustritt geschaffen und eine gleichmäßige Befüllung des Formierraums mit dem Formiergas bewirkt.

Nachteilig an derartigen Doppelscheiben-Formiervorrichtungen ist, dass die Beschickung mit dem Formiergas häufig zu rasch vorgenommen wird. Hierdurch baut sich schlagartig ein Druck im Formierraum auf. Eine noch nicht erstarrte Schweißnaht kann hierdurch ausgeblasen werden. Hierzu reichen bereits relativ geringe Drücke aus.

Die EP 2 067 562 A1 schlägt in Anbetracht dieser Nachteile eine Formiervorrichtung zum Zuführen wenigstens eines Wurzelschutzgases zur Wurzelseite mindestens eines zu fügenden Bereichs vor, bei der eine Wurzelschutzgasleiteinrichtung zum Führen oder zum Lenken des zugeführten Wurzelschutzgases entlang der Wurzelseite eines zu fügenden Bereichs vorgesehen ist. Die Wurzelschutzgasleiteinrichtung ist als zylindrischer Körper ausgebildet, dessen Außendurchmesser geringer als der Innendurchmesser des zu fügenden Rohrs ist. Eine derartige Einrichtung ist jedoch nicht zum Schweißen gebogener Rohre geeignet und nur schlecht an Rohre unterschiedlicher Durchmesser oder Geometrien anpassbar.

Vor diesem Hintergrund besteht der Bedarf nach Verbesserungen bei derartigen Gasbeaufschlagungsvorrichtungen für Rohrinnenbereiche.

### Offenbarung der Erfinung

Vor diesem Hintergrund schlägt die Erfindung eine Gasbeaufschlagungsvorrichtung für Rohrinnenbereiche und ein Schweißverfahren unter Verwendung einer solchen Vorrichtung mit den Merkmalen der unabhängigen Ansprüche vor. Bevorzugte Ausgestaltungen sind in den jeweiligen Unteransprüchen angegeben und werden in der nachfolgenden Beschreibung weiter erläutert.

### Vorteile der Erfindung

Die Erfindung geht z.B. von einer an sich bekannten Doppelscheiben-Formiervorrichtung aus. Hierbei handelt es sich, wie erläutert, um eine Gasbeaufschlagungsvorrichtung für Rohrinnenbereiche, welche ein erstes Abschlusselement und ein zweites Abschlusselement aufweist. Die Abschlusselemente sind parallel angeordnet und axial voneinander beabstandet. Hierdurch wird zwischen den Abschlusselementen ein Zwischenbereich definiert, der nach einer Einführung in ein Rohr als Formierraum dient. Die Abschlusselemente weisen in Axialprojektion gleiche Umrisslinien auf und sind in ihrer Form an ein mit Formiergas zu beaufschlagendes Rohr angepasst. Sie müssen nicht notwendigerweise rund sein. Durch das erste Abschlusselement führt wenigstens eine Gaszuleitung und mündet in wenigstens eine im Zwischenbereich angeordnete Ausströmeinrichtung. Die vorliegende Erfindung schlägt vor, die wenigstens eine Ausströmeinrichtung als Düsenanordnung auszubilden, die dafür eingerichtet ist, einen Abschnitt eines dem Zwischenbereich entsprechenden Rohrinnenbereichs mit einem Gasstrom zu beaufschlagen, wenn die Gasbeaufschlagungsvorrichtung in ein Rohr eingesetzt ist und ein Gas durch die wenigstens eine Gaszuleitung eingeleitet wird.

Anders als die zuvor erwähnten Doppelscheiben-Formiervorrichtungen, welche eine Ausströmeinrichtung in Form eines Sintermetallelements aufweisen, schlägt die vorliegende Erfindung also vor, eine Düsenanordnung vorzusehen, welche einen definierten, vorzugsweise laminaren, Gasstrom erzeugt. Der Zwischenbereich zwischen den Abschlusselementen wird damit nicht zwingend vollständig von dem eingespeisten Gas geflutet, sondern es wird eine definierte Strömung erzeugt. Diese kann auf einen Abschnitt eines Rohrinnenbereichs gerichtet sein und/oder entlang dieses Abschnitts verlaufen. Die bekannten Sintermetallelemente sind hingegen dafür vorgesehen, das Gas möglichst diffus ausströmen zu lassen. Dieser Prozess ist zeitaufwendig und birgt die Gefahr, dass bereits zu einem Zeitpunkt mit dem Schweißvorgang begonnen wird, zu dem der entsprechende Bereich noch nicht vollständig geflutet ist, oder dass das Gas, wie erwähnt, mit zu hohem Druck eingespeist wird. Mit der erfindungsgemäßen Vorrichtung wird also die Spülzeit signifkant verkürzt.

Da im Rahmen der vorliegenden Erfindung jedoch auf Gasleiteinrichtungen, wie sie aus der EP 2 067 562 A1 bekannt sind, verzichtet wird, kann eine solche Vorrichtung auch in gebogenen Rohren eingesetzt werden. Beispielsweise kann eine entsprechende Vorrichtung an einem Seil und/oder an einer entsprechend verstärkten Gasleitung durch Rohrbögen gezogen werden. Die erfindungsgemäße Vorrichtung kann, wie eine mit einer Gasleiteinrichtung versehene Vorrichtung, einen schmalen, ringförmigen Bereich mit einer laminaren Gasströmung erzeugen, in welchem durch die Gasströmung ein Abtransport von Partikeln während des Schweißprozesses gewährleistet ist. Hierdurch werden Anlauffarben unterbunden und auch die Bildung sogenannter Manganfahnen wird vermieden.

Die vorliegende Erfindung verbessert damit eine Gasbeaufschlagungsvorrichtung mit einer Gasleiteinrichtung gemäß dem Stand der Technik. Der Gasstrom nicht durch einen Spalt zwischen einem Verdrängungskörper (einer Gasleiteinrichtung) und der Rohrwand, sondern durch eine Anzahl von gerichteten Bohrungen in einer Düsenanordnung erzeugt. Diese Bohrungen (Düsenkanäle) sind vorzugsweise so ausgerichtet, dass der Gasstrom an der Rohrwand im Bereich einer Schweißnaht, oder dicht daneben, fokussiert und auf diese Weise eine hohe Strömungsgeschwindigkeit auch ohne Verdrängungskörper erreicht wird.

Besonders vorteilhaft ist daher eine Gasbeaufschlagungsvorrichtung, die wenigstens eine Düsenanordnung aufweist, die so ausgebildet ist, dass sie einen Gasstrom auf wenigstens einen Abschnitt des Rohrinnenbereichs fokussieren kann. Wie erwähnt, kann es sich hierbei um einen Schweiß- bzw. Fügebereich handeln, vorzugsweise wird ein Gasstrom jedoch so gelenkt, dass er nicht direkt auf die Nahtwurzel bläst (dies könnte die Nahtqualität verschlechtern) sondern unmittelbar davor. Der Ort, an dem der Gasstrom auf den wenigstens einen Abschnitt des Rohrinnenbereichs auftrifft, vorzugsweise ein ringförmiger Bereich, wird durch die Anordnung der Düsen definiert und kann aufgrund einer festen räumlichen Beziehung zwischen den Düsen und den Abschlusselementen einfach eingestellt werden.

Wie erwähnt, ist es besonders vorteilhaft, wenn die wenigstens eine Düsenanordnung so ausgebildet ist, dass sie in dem wenigstens einen Abschnitt des Rohrinnenbereichs einen wenigstens teilweise axialen und/oder zylindrischen Gasstrom erzeugen kann. Eine erfindungsgemäße Vorrichtung entfaltet damit Vorteile gegenüber der zuvor erläuterte Vorrichtung mit Gasleiteinrichtung. Ein entsprechender zylindrischer Gasstrom leitet ein Formiergas besonders effektiv zu einem Schweißbereich und/oder führt, wie erwähnt, Partikel ab.

Eine erfindungsgemäße Vorrichtung weist vorteilhafterweise eine Düsenanordnung auf, die zumindest einen axial und/oder zumindest einen radial ausgerichteten Düsenkranz umfasst. Durch einen radial ausgerichteten Düsenkranz kann beispielsweise eine gezielte Zone an der Rohrinnenwand mit dem Gasstrom beaufschlagt werden, eine axiale Strömungskomponente sorgt dafür, dass sich ingesamt eine laminare Strömung in dem Zwischenbereich ergibt. Der Anteil der durch einen entsprechenden axialen und/oder einen radialen Düsenkranz strömenden Anteile eines Gasstroms und/oder mehrerer Gasströme kann auch einstellbar sein, um einen gezielte Anpassung an die vorliegende Schweißaufgabe zu ermöglichen. Es kann auch vorgesehen sein, in mehreren Düsenanordnungen unterschiedliche Gase zu verwenden.

Besonders vorteilhaft ist eine Gasbeaufschlagungsvorrichtung, die Drallmittel aufweist, um einen aus den Düsen der wenigstens einen Düsenanordnung ausströmenden Gasstrom mit einem Drall zu beaufschlagen. Die axiale Strömung des Gases zwischen den Abschlusselementen erhält hierdurch eine schraubenförmige Komponente, die die Strömung entlang der Rohrinnenwand weiter stabilisiert. Auch wird durch eine entsprechende Drallkomponente eine relative Verweildauer des Gases erhöht, wodurch sich Gas einsparen lässt.

Vorteilhafterweise weisen zumindest einige Düsen der Düsenanordnung einen schrägen Düsenkanal auf, also einen Düsenkanal, der gegenüber einer von einer Mittelachse der Gasbeaufschlagungsvorrichtung ausgehenden Radiallinie schräg verläuft. Die Düsenkanäle können dabei axial gegenüber einer entsprechenden Radiallinie geneigt sein, also beispielsweise von dem ersten Abschlusselement in Richtung des zweiten Abschlusselements. Hierdurch wird ein laminarer Fluss des aus der Düsenanordnung ausströmenden Gasstroms erzielt. Um einen entsprechenden Drall zu erzeugen, kann der Düsenkanal jedoch auch eine tangentiale Neigung aufweisen, so dass ein schraubenförmiger Fluss des Gasstroms induziert werden kann. Entsprechende Winkel können beispielsweise 0° bis 45° betragen.

In dem zweiten Abschlusselement sind vorteilhafterweise Gasausströmöffnungen vorgesehen, die ein Ausströmen des in den Zwischenbereich eingespeisten Gases ermöglichen. Hierdurch wird ein laminarer Fluss in dem Zwischenbereich begünstigt und ein schädlicher Druckaufbau vermieden. Wie erwähnt, kann ein Druckaufbau in herkömmlichen Formiergasvorrichtungen leicht zu einem Ausblasen des noch flüssigen Materials aus der Schweißnaht führen.

Vorteilhafterweise definieren die Abschlusselemente der erfindungsgemäßen Gasbeaufschlagungsvorrichtung eine zylinderförmige Mantelfläche, so dass diese in zylindrischen Rohren eingesetzt werden kann. Andere Geometrien sind jedoch je nach den zu schweißenden Rohren ebenfalls verwendbar.

Vorteilhafterweise umfassen die Abschlusselemente Dichtungsmanschetten, die einen besonders guten Abschluss der Abschlusselemente in dem Rohr sicherstellen.

Vorteilhaft kann auch sein, einen Außendurchmesser der Abschlusselemente einstellbar auszubilden, so dass diese an unterschiedliche Rohrdurchmesser angepasst werden können. Dies kann beispielsweise durch aufsteckbare Manschetten erfolgen.

Vorteilhafterweise ist auch ein Axialabstand der Abschlusselemente einstellbar, so dass die Wegstrecke der laminaren Strömung definiert und/oder ein Sicherheitsabstand zu einer Schweißnaht eingehalten werden kann.

Ein Schweißverfahren, das erfindungsgemäß ebenfalls vorgeschlagen wird, dient zum Fügen wenigstens zweier Rohre. Es umfasst, die wenigstens zwei Rohre axial derart auszurichten, dass eine Fügelinie definiert wird. Anschließend wird eine zuvor erläuterte Gasbeaufschlagungsvorrichtung in die wenigstens zwei Rohre derart eingesetzt, dass die Fügelinie in dem Zwischenbereich zwischen den Abschlusselementen angeordnet ist. Ein Gas wird so in den Zwischenbereich eingeleitet, dass über die Düsenanordnung ein Abschnitt des dem Zwischenbereich entsprechenden Rohrinnenbereichs mit einem Gasstrom beaufschlagt wird. Nach Einstellen einer entsprechenden laminaren Strömung und/oder einer gewünschten Gaskonzentration in dem Zwischenbereich kann damit begonnen werden, die wenigstens zwei Rohre zu fügen. Das erfindungsgemäße Verfahren profitiert hierbei von den zuvor erläuterten Vorteilen.

Bei einem entsprechenden Schweißverfahren werden im Vergleich zum Stand der Technik vergleichsweise höhere Gasströme verwendet. Bei den herkömmlichen Formiergaseinrichtungen kommen üblicherweise 4 bis 8 l/min Formiergas zum Einsatz. Hierdurch wird nicht immer eine ausreichend schnelle Spülung sichergestellt. Im Gegensatz dazu schlägt die Erfindung die Verwendung von Volumenströmen von wenigstens 8 l/min, wenigstens 10 l/min, wenigstens 12 l/min, wenigstens 15 l/min, wenigstens 20 l/min oder wenigstens 30 l/min und/oder höchstens 50 l/min vor. Dies erlaubt eine sehr effektive Abführung von Gasen oder Partikeln.

Das erfindungsgemäße Verfahren eignet sich zur Verwendung sämtlicher zuvor erläuterter Gase oder Gasgemische, insbesondere können Argon-Wasserstoff-Gemische, Stickstoff-Wasserstoff-Gemische, Argon oder Stickstoff verwendet werden. Wie erläutert, sind insbesondere Gase mit Wasserstoffanteilen von Vorteil, weil hierdurch eine reduzierende Wirkung des Gases erzielt und/oder die Oberflächenspannung der Schweißnaht günstig beeinflusst wird. Wie erwähnt, eignet sich das Schweißverfahren in besonderer Weise zur Schweißung gebogener Rohre.

Die Erfindung wird nachfolgend unter Bezugnahme auf die beigefügten Zeichnungen näher erläutert, welche eine bevorzugte Ausführungsform zeigen.

### Kurze Beschreibung der Zeichnungen

Figur 1 zeigt eine Gasbeaufschlagungsvorrichtung gemäß einer besonders bevorzugten Ausführungsform der Erfindung in schematischer Darstellung.
Figur 2 zeigt eine Gasbeaufschlagungsvorrichtung gemäß einer besonders bevorzugten Ausführungsform der Erfindung in einer schematischen Teilansicht.
Figuren 3A und 3B zeigen Düsenanordnungen gemäß besonders bevorzugter Ausführungsformen der Erfnidung.
Figur 4 zeigt ein Verfahren gemäß einer besonders bevorzugten Ausführungsform der Erfindung in Form eines Ablaufplans.

### Ausführungsformen der Erfindung

In den Figuren sind gleiche oder gleichwirkende Elemente mit identischen Bezugszeichen angegeben. Auf eine wiederholte Erläuterung wird verzichtet.

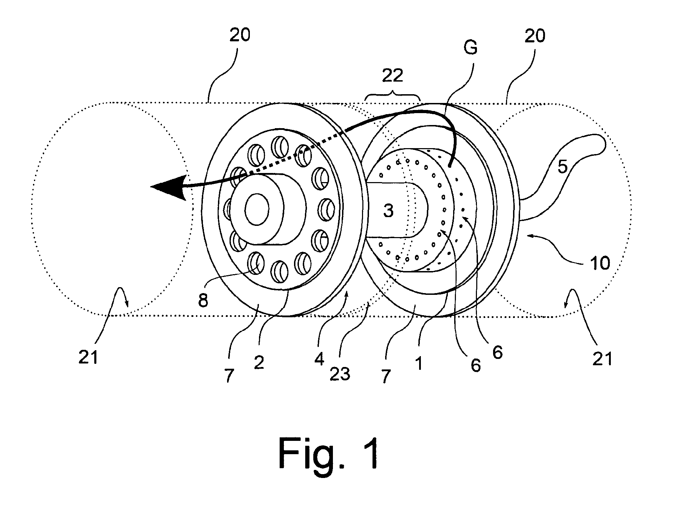

Figur 1 zeigt eine Gasbeaufschlagungsvorrichtung 10 gemäß einer besonders bevorzugten Ausführungsform der Erfindung. Die Gasbeaufschlagungsvorrichtung 10 ist in zwei axial ausgerichtete Rohre 20 eingesetzt, die gestrichelt dargestellt sind und einen Rohrinnenbereich 21 umfassen. Zwischen den ausgerichteten Rohren ist eine Fügelinie 23 definiert, entlang derer die Rohre 20 mittels eines Fügeverfahrens miteinander verbunden werden können.

Die Gasbeaufschlagungsvorrichtung 10 weist ein erstes Abschlusselement 1 und ein zweites Abschlusselement 2 auf. Die Abschlusselemente 1, 2 sind parallel angeordnet und axial voneinander beabstandet, wodurch ein Zwischenbereich 4 zwischen den Abschlusselementen gebildet wird. Die Abschlusselemente 1, 2 sind scheibenförmig ausgebildet und können Dichtmanschetten 7 aufweisen. In dem zweiten Abschlusselement 2 sind Gasauströmöffnungen 8 vorgesehen.

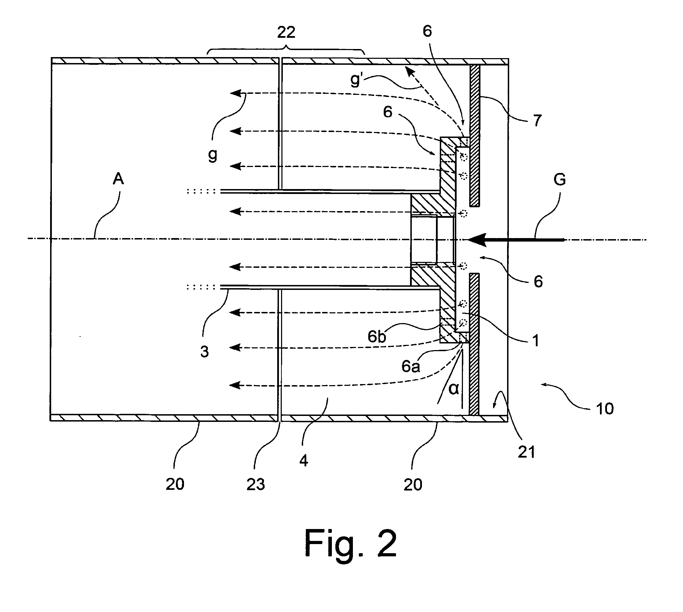

Der Axialabstand zwischen dem ersten Abschlusselement 1 und dem zweiten Abschlusselement 2 wird durch einen geeigneten Abstandshalter 3, z.B. in Form einer Strebe 3, definiert. Wenigstens eine Gaszuleitung 5 führt durch das erste Abschlusselement und mündet in wenigstens eine Düsenanordnung 6, die in dem Zwischenbereich angeordnet ist. Die wenigstens eine Düsenanordnung 6, hier in Form zweier Düsenkränze, ist dazu ausgebildet, einen Abschnitt 22 des Rohrinnenbereichs 21 mit einem Gasstrom, hier durch einen Pfeil G veranschaulicht, zu beaufschlagen, wenn die Gasbeaufschlagungsvorrichtung 10 in das wenigstens eine Rohr 20 eingesetzt ist. Figur 2 zeigt eine Teilansicht der Gasbeaufschlagungsvorrichtung 10 im Längsschnitt. Hierbei ist lediglich das erste Abschlusselement 1 mit einem Teil des Abstandshalters 3 dargestellt. Die Darstellung ist stark schematisiert.

Ein Gasstrom G wird über wenigstens eine nicht dargestellte Gaszuleitung 5 zugeführt. Er tritt über die bereits im Zusammenhang mit Figur 1 erläuterten Düsenanordnungen 6 aus. Die Düsenanordnungen 6 umfassen radial ausgerichtete Düsen 6a und axial ausgerichtete Düsen 6b. Es sind nur jene Gasteilströme g dargestellt, die über die radial ausgerichteten Düsen 6a ausströmen. Die Düsenkanäle der radial ausgerichteten Düsen 6a können gegenüber einer Radiallinie, die von einer Mittelachse A der Gasbeaufschlagungsvorrichtung 10 ausgehend nach außen verläuft, um den Winkel α geneigt sein. Wie unten näher erläutert, kann auch ein weiterer Neigungswinkel β vorgesehen sein, der einem Neigungswinkel der Düsenkanäle gegenüber der Radiallinie in einer Tangentialrichtung angibt. Durch die spezifische Ausbildung der Düsen 6a und 6b in den Düsenanordnungen 6 wird eine laminare Strömung im Zwischenbereich 4 erzeugt. Ein Gasstrom g' kann auch gezielt auf einen Abschnitt 22 des Rohrinnenbereichs 21 gerichtet sein.

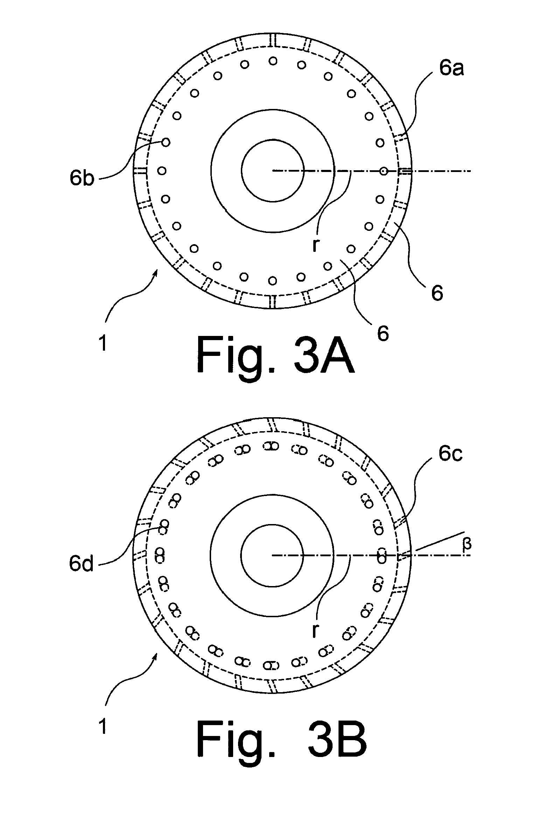

Figuren 3A und 3B zeigen eine Draufsicht auf Düsenanordnungen in einem ersten Abschlusselement 1 einer Gasbeaufschlagungsvorrichtung gemäß einer besonders bevorzugten Ausführungsform. Die Draufsicht ist aus einer Sicht ausgehend von dem zweiten Abschlusselement 2 dargestellt. Verdeckte Kanten und Kanäle sind gestrichelt dargstellt. Es sind zwei Düsenanordnungen 6 vorgesehen, wobei eine erste Düsenanordnung 6 radial ausgerichtete Düsen 6a und eine zweite Düsenanordnung 6 axial ausgerichtete Düsen 6b umfast. In der Darstellung der Figur 3A sind die radial ausgerichteten Düsen 6a mit ihren Düsenkanälen entsprechend einer Radiallinie r ausgerichtet und nicht gegenüber dieser geneigt. Abweichend dazu zeigen die in der Figur 3B dargestellten Düsen 6c eine entsprechende Neigung um einen Neigungswinkel β. Der Neigungswinkel β kann beispielsweise 0° bis 45° betragen. Auch die Düsen 6d sind schräg ausgerichtet, wodurch der Gasstrom in dem Zwischenbereich 3 insgesamt mit einem Drall versehen werden kann.

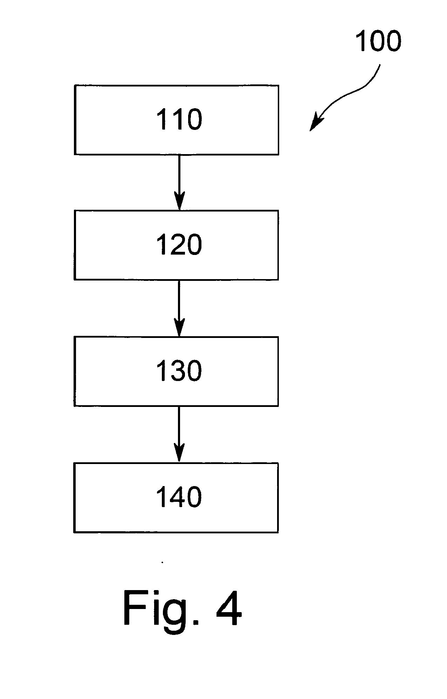

Figur 4 zeigt ein Verfahren 100 gemäß einer besonders bevorzugten Ausführungsform der Erfindung in Form eines Ablaufplans. In einem ersten Verfahrensschritt 110 werden wenigstens zwei Rohre, wie beispielsweise die zuvor dargestellten Rohre 20, axial derart ausgerichtet, dass eine Fügelinie 23 definiert wird. In einem zweiten Schritt 120 wird eine Gasbeaufschlagungsvorrichtung 10, wie zuvor erläutert, in die wenigstens zwei Rohre so eingesetzt, dass die Fügelinie 23 in dem Zwischenbereich zwischen den Abschlusselementen 1, 2 angeordnet ist. In einem Schritt 130 erfolgt eine Gasbeaufschlagung eines Abschnitts eines Rohrinnenbereichs wenigstens eines der Rohre durch Einleiten eines Gases über die Gaszuleitung 5. Hierdurch wird mittels der wenigstens einen Düsenanordnung 6 ein Gasstrom erzeugt. In Schritt 140 erfolgt ein Fügen der wenigstens zwei Rohre 20 mittels eines geeigneten Verfahrens.

### Bezugszeichenliste

- 1: erstes Abschlusselement
- 2: zweites Abschlusselement
- 3: Abstandshalter
- 4: Zwischenbereich
- 5: Gaszuleitung
- 6: Düsenanordnungen
- 6a - 6d: Düsen
- 7: Dichtungsmanschetten
- 8: Gasausströmungsöffnungen

- 10: Gasbeaufschlagungsvorrichtung

- 20: Rohr
- 21: Rohrinnenbereich
- 22: Abschnitt
- 23: Fügelinie

- 100: Schweißverfahren
- 110: Ausrichten
- 120: Einsetzen
- 130: Gasbeaufschlagung
- 140: Fügen

- G, g, g': Gasströme
- r: Radiuslinie

## Patentansprüche

1. Gasbeaufschlagungsvorrichtung (10) für Rohrinnenbereiche (21), die ein erstes Abschlusselement (1) und ein zweites Abschlusselement (2) aufweist, wobei die Abschlusselemente (1, 2) parallel angeordnet und axial voneinander beabstandet sind, wodurch zwischen den Abschlusselementen (1, 2) ein Zwischenbereich (4) gebildet wird, und wobei durch das erste Abschlusselement (1) wenigstens eine Gaszuleitung (5) führt und in wenigstens eine in dem Zwischenbereich (4) angeordnete Ausströmeinrichtung mündet, **dadurch gekennzeichnet, dass** die Ausströmeinrichtung als wenigstens eine Düsenanordnung (6) ausgebildet ist, die eingerichtet ist, einen Abschnitt (22) eines dem Zwischenbereich (4) entsprechenden Rohrinnenbereichs (21) mit einem Gasstrom zu beaufschlagen, wenn die Gasbeaufschlagungsvorrichtung (10) in wenigstens ein Rohr (20) eingesetzt ist.

2. Gasbeaufschlagungsvorrichtung (10) nach Anspruch 1, bei der die wenigstens eine Düsenanordnung (6) so ausgebildet ist, dass sie einen Gasstrom auf den wenigstens einen Abschnitt (22) des Rohrinnenbereichs (21) fokussieren kann.

3. Gasbeaufschlagungsvorrichtung (10) nach Anspruch 1 oder 2, bei der die wenigstens eine Düsenanordnung (6) so ausgebildet ist, dass sie in dem wenigstens einen Abschnitt (22) des Rohrinnenbereichs (20) einen wenigstens teilweise axialen und/oder zylindrischen Gasstrom erzeugen kann.

4. Gasbeaufschlagungsvorrichtung (10) nach einem der vorstehenden Ansprüche, bei der die Düsenanordnung (6) zumindest einen axial und/oder zumindest einen radial ausgerichteten Düsenkranz (6b) aufweist.

5. Gasbeaufschlagungsvorrichtung (10) nach einem der vorstehenden Ansprüche, die Drallmittel aufweist, um einen aus den Düsen der wenigstens einen Düsenanordnung (6) ausströmenden Gasstrom mit einem Drall zu beaufschlagen.

6. Gasbeaufschlagungsvorrichtung (10) nach einem der vorstehenden Ansprüche, bei der zumindest einige Düsen der Düsenanordnung (6) einen Düsenkanal aufweisen, der gegenüber einer von einer Mittelachse der Gasbeaufschlagungsvorrichtung (10) ausgehenden Radiallinie schräg verläuft.

7. Gasbeaufschlagungsvorrichtung (10) nach einem der vorstehenden Ansprüche, bei dem das zweite Abschlusselement (2) Gasausströmöffnungen (8) aufweist.

8. Gasbeaufschlagungsvorrichtung (10) nach einem der vorstehenden Ansprüche, bei der die Abschlusselemente (1, 2) eine zylinderförmige Mantelfläche definieren.

9. Gasbeaufschlagungsvorrichtung (10) nach einem der vorstehenden Ansprüche, bei der die Abschlusselemente (1, 2) Dichtungsmanschetten (7) aufweisen.

10. Gasbeaufschlagungsvorrichtung (10) nach einem der vorstehenden Ansprüche, bei der ein Außendurchmesser der Abschlusselemente (1, 2) einstellbar ist.

11. Gasbeaufschlagungsvorrichtung (10) nach einem der vorstehenden Ansprüche, bei der ein Axialabstand der der Abschlusselemente (1, 2) einstellbar ist.

12. Schweißverfahren (100) zum Fügen wenigstens zweier Rohre (20), das umfasst, die wenigstens zwei Rohre (20) axial derart auszurichten (110), dass eine Fügelinie (23) definiert wird, eine Gasbeaufschlagungsvorrichtung (10) gemäß einem der vorstehenden Ansprüche in die wenigstens zwei Rohre (20) so einzuführen (120), dass die Fügelinie (23) in dem Zwischenbereich (4) zwischen den Abschlusselementen (1, 2) angeordnet ist, einen Abschnitt (22) eines dem Zwischenbereich (4) entsprechenden Rohrinnenbereichs (21) wenigstens eines der Rohre (20) durch Einleiten (130) eines Gases über die Gaszuleitung (5) mittels der wenigstens einen Düsenanordnung (6) mit einem Gasstrom zu beaufschlagen und die wenigstens zwei Rohre (20) zu fügen (140).

13. Schweißverfahren (100) nach Anspruch 12, bei dem das Gas mit einem Volumenstrom von wenigstens 8 l/min, 10 l/min, 12 l/min, 15 l/min, 20 l/min oder 30 l/min und/oder höchstens 50 l/min über die Gaszuleitung (5) eingeleitet wird.

14. Schweißverfahren (100) nach Anspruch 12 oder 13, bei dem als Gas ein Argon-Wasserstoff-Gemisch, ein Stickstoff-Wasserstoff-Gemisch, Argon oder Stickstoff verwendet wird.

15. Schweißverfahren (100) nach einem der Ansprüche 12 bis 14, bei dem die wenigstens zwei Rohre (20) wenigstens ein gebogenes Rohr umfassen.
